# EUROPÄISCHE PATENTSCHRIFT

(11) **EP 3 933 797 B1**
(45) Veröffentlichungstag und Bekanntmachung des Hinweises auf die Patenterteilung: **04.12.2024**
(21) Anmeldenummer: 21176412.1
(22) Anmeldetag: 28.05.2021
(51) Int. Cl.: H05B 47/115, G01S 13/04, F21V 23/04, G08C 17/02, G08B 21/22

(54) **NETZWERKFÄHIGE GEBÄUDETECHNIKVORRICHTUNG MIT PRÄSENZSENSOR**
NETWORK-CAPABLE BUILDING TECHNOLOGY DEVICE WITH PRESENCE SENSOR
DISPOSITIF DE TECHNIQUE DU BÂTIMENT COMPATIBLE AVEC DES RÉSEAUX POURVU DE CAPTEUR DE PRÉSENCE

(30) Priorität: 02.07.2020 DE 102020117450
(43) Veröffentlichungstag der Anmeldung: 05.01.2022
(73) Patentinhaber: Tridonic GmbH & Co. KG, 6851 Dornbirn (AT)
(72) Erfinder: Horn, Frank, 6850 Dornbirn (AT)
(74) Vertreter: Beder, Jens

(56) Entgegenhaltungen:
- EP-A1- 3 013 123
- EP-A1- 3 571 525
- DE-A1- 102013 108 927
- DE-A1- 102018 000 893

## Beschreibung

Die Erfindung betrifft das Gebiet der Gebäudetechnik, insbesondere das der Beleuchtungstechnik, und der Vernetzung von Gebäudetechnikvorrichtungen, beispielsweise Leuchten. Insbesondere wird eine mit einem Präsenzsensor ausgestattete und netzwerkfähige Vorrichtung der Gebäudetechnik, ein System mit entsprechend vernetzten Vorrichtungen sowie ein Signalübertragungsverfahren für derartige Systeme gezeigt.

In der Gebäudetechnik und der Gebäudeautomation wird eine Vernetzung der einzelnen Systemkomponenten, also einzelner Vorrichtungen der Gebäudetechnik, angestrebt. Die vernetzten Vorrichtungen der Gebäudetechnik empfangen und senden Informationen in Form von Signalen unter Verwendung kabelgebundener und kabelloser Übertragungsverfahren über ein Übertragungsnetz.

Kabelgebundene Übertragungsverfahren erfordern eine Vernetzung der einzelnen Vorrichtungen mittels elektrischer oder optischer Kabel und sind daher mit Kostenaufwand und Investitionen in Gebäudeinfrastruktur verbunden. Kabelgebundene Übertragungsverfahren sind per se statisch und sind für eine flexible Raumnutzung innerhalb eines Gebäudes weniger geeignet. Entsprechend getätigte Investitionen sind bei geänderter Anordnung der Vorrichtungen möglicherweise verloren oder zumindest nicht effizient genutzt. Zu den kabelgebundenen Übertragungsverfahren gehören auch die Übertragungsverfahren, die vorhandene Stromversorgungsleitungen zusätzlich für die Informationsübertragung nutzen (englisch: Power Line Communication, abgekürzt: PLC). Für PLC-gestützte Übertragungsverfahren sind zusätzliche Sende-/Empfangsvorrichtungen in den einzelnen zu vernetzenden Vorrichtungen der Gebäudetechnik erforderlich.

Kabellose Übertragungsverfahren ermöglichen eine flexible Nutzung des Gebäudes und nutzen beispielsweise funkgestützte Übertragungsverfahren oder optische Übertragungsverfahren.

Funkgestützte Übertragungsverfahren ordnen in den einzelnen Vorrichtungen der Gebäudetechnik Funk-Sende-/Empfangsmodule und Antennen an. Nachteilig ist sind die notwendigen zusätzlichen Sende-/Empfangsvorrichtungen, sowie die Einschränkungen, die sich hinsichtlich der räumlichen Anordnung im Gebäude und der Anordnung von Antennen an den oftmals metallischen Gehäusen der Gebäudetechnikvorrichtungen ergeben, sowohl in technischer Hinsicht als auch in Bezug auf das Vorrichtungsdesign. Funkgestützte Übertragungsverfahren sind auch nachteilig, da die unerwünschte Belastung durch elektromagnetische Strahlung innerhalb eines Gebäudes durch die zusätzlichen Funksignale vergrößert wird.

Kabellose optische Übertragungsverfahren sind insbesondere auf dem Gebiet der Beleuchtungstechnik möglich. Dabei wird die zu übertragende Information auf das von der Beleuchtungsvorrichtung abgegebene Licht moduliert, beispielsweise mittels Pulsweitenmodulation. Dafür sind zumindest sendeseitige Modulationseinrichtungen und zusätzliche empfangsseitige Lichtsensoren mit entsprechenden Empfangs- und Signalauswerteinrichtungen erforderlich.

Optische Übertragungsverfahren weisen hohe Übertragungsbandbreiten auf, die eine Nutzung für allgemeine Kommunikationsanwendungen (systemfremde Daten) ermöglichen. Für die Vernetzung von Steuereinheiten einzelner Vorrichtungen der Gebäudetechnik steht die Übertragung von Informationen in den Übertragungssignalen, wie zum Beispiel Sensordaten (Sensorsignale) und/oder Steuerdaten (Steuersignale) an Aktoren, Daten für eine Parametrierung (Parameterdaten) oder Adressierung (Adressdaten) von Geräten und Vorrichtungen der Gebäudetechnik anstatt systemfremder Daten im Vordergrund. Das Datenvolumen ist daher oftmals begrenzt.

EP 3 571 525 A1 beschreibt Techniken und Vorrichtungen, die Radarmodulationen zur Radarerfassung unter Verwendung eines drahtlosen Kommunikationschipsatzes ermöglichen. Ein Controller initialisiert oder steuert Modulationen, die von einem drahtlosen Kommunikationschipsatz durchgeführt werden. Auf diese Weise kann der Controller dem drahtlosen Kommunikationschipsatz ermöglichen, Modulationen für drahtlose Kommunikation oder Radarerfassung durchzuführen. In einigen Fällen kann die Steuerung ferner einen drahtlosen Kommunikationskanal zum Einstellen einer Frequenz und einer Bandbreite eines Radarsignals auswählen, wodurch eine Interferenz zwischen mehreren Radarsignalen oder zwischen dem Radarsignal und einem Kommunikationssignal vermieden wird. In anderen Fällen kann die Steuerung den drahtlosen Kommunikationschipsatz veranlassen, ein Signal, das Kommunikationsdaten enthält, unter Verwendung einer Radarmodulation zu modulieren. Dadurch kann ein anderes Gerät, das das Signal empfängt, eine drahtlose Kommunikation oder Radarerfassung durchführen. Durch Nutzung dieser Techniken kann der drahtlose Kommunikationschipsatz für drahtlose Kommunikation oder Radarerfassung verwendet werden.

EP 3 013 123 A1 offenbart ein Beleuchtungssystem mit einer Vielzahl von Leuchten, wobei jede Leuchte ein Leuchtensteuerungsmodul, ein Bewegungsmeldermodul und ein Kommunikationsmodul aufweist. Das Leuchtensteuerungsmodul ist mit dem Bewegungsmeldermodul und dem Kommunikationsmodul verbunden. Das Beleuchtungssystem, das insbesondere in einer erweiterten Bürosituation anwendbar ist, zeichnet sich dadurch aus, dass das Kommunikationsmodul über einen Funkkanal arbeitet und dass das Leuchtensteuerungsmodul die Helligkeit und/oder die Farbe der jeweiligen Leuchte separat abhängig von den Signalen der jeweils anderen Leuchten über den Funkkanal und von der Position der Leuchten in einem zweidimensionalen Koordinatensystem steuert.

DE 10 2013 108927 A1 zeigt ein Verfahren zur Steuerung von Leuchten in großen Hallen, sowie eine entsprechende Vorrichtung zur Steuerung von Leuchten, die einen Steuercomputer umfasst. Der Steuercomputer ist mit einem Gateway versehen, das der Kommunikation mit externen Geräten dient. Bei dem externen Gerät kann es sich um ein Funk-Empfangs- und Sendegerät handeln, das mit mindestens einem elektronischen Vorschaltgerät kommuniziert, das mit mindestens einer der Leuchten in Verbindung steht.

Es stellt sich daher die Aufgabe, Übertragungsverfahren für Daten in einem System der Gebäudetechnik zu schaffen, deren Eignung gegenüber den bekannten Übertragungsverfahren hinsichtlich technische Auslegung und Kosten verbessert ist. Aufgabe ist es insbesondere, ein System und ein Verfahren bereitzustellen, mit denen Signale ohne Verwendung elektrischer oder optischer Verbindungsleiter und mit geringem Aufwand für zusätzliche Module wie Antennen und Sende-/Empfangseinheiten übertragen werden können.

Die Aufgabe wird in einem ersten Aspekt durch eine Vorrichtung der Gebäudetechnik mit den Merkmalen nach Anspruch 1 gelöst.

Die Vorrichtung der Gebäudetechnik (im Folgenden auch:
Gebäudetechnikvorrichtung, oder kurz: Vorrichtung) umfasst einen Präsenzerfassungssensor, wobei der Präsenzerfassungssensor aufweist:einen Signalerzeuger zur Erzeugung eines ersten Funksignals und mit einem Modulationseingang für die Zuführung eines Modulationssignals, wobei der Signalerzeuger eingerichtet ist, das erste Funksignal als ein mit dem Modulationssignal moduliertes Signal auszugeben,zumindest eine Antenne,einen Empfänger für den Empfang eines zweiten Funksignals,eine Ausgangsschnittstelle, welche dazu ausgelegt ist, ein aus dem zweiten Funksignal erzeugtes informationstragendes Signal auszugeben, und einen Auswerter zur Erzeugung einer Präsenzinformation mittels einer Auswertung des zweiten Funksignals,dadurch gekennzeichnet, dass der Signalerzeuger dafür eingerichtet ist, das erste Funksignal mit einem aus dem zweiten Funksignal demodulierten informationstragenden Signal zu modulieren, und die Vorrichtung eine Leuchte ist.

Die Steuerung von Gebäudetechnikvorrichtung mittels Präsenzsensoren, die eine Anwesenheit und somit indirekt auch Abwesenheit von Personen in Räumen erfassen, ist üblich. Beispielsweise werden in Großraumbüros eine Mehrzahl eigenständiger Leuchten angeordnet, die nicht mittels eines gemeinsamen Kommunikationsnetzes miteinander verbunden sind. Damit verfügen diese eigenständigen Leuchten über keinen gemeinsamen Kommunikationskanal. In vielen Fällen ist allerdings ein Präsenzerfassungssensor, oftmals ausgebildet als Radarsensor und ausgelegt für die Erkennung der Anwesenheit von Personen in seinem Erfassungsbereich, vorgesehen. Zentraler Vorteil der erfindungsgemäßen Gebäudetechnikvorrichtung ist es nun, mittels dieses - modifizierten - Präsenzerfassungssensors eine Kommunikation zumindest zwischen benachbarten Leuchtvorrichtungen zu ermöglichen. Um eine Information in Form von Nutzdaten von einer erfindungsgemäßen Gebäudetechnikvorrichtung an eine benachbarte Gebäudetechnikvorrichtung zu übermitteln, ist vorgesehen, das von dem Präsenserfassungssensor erzeugte elektromagnetische Signal mit der zu übertragenden Information zu modulieren. Damit wird der in der Gebäudetechnikvorrichtung ohnehin vorgesehene Präsenzerfassungssensor für die Verwirklichung einer zusätzlichen Funktion - Nutzdatenübertragung - genutzt, wobei keine zusätzlichen technischen Vorrichtungen zum Erzeugen und Senden eines Kommunikationssignals in der Gebäudetechnikvorrichtung vorzusehen sind. Die zusätzliche Funktionalität der Vorrichtung wird vielmehr durch eine Modifikation des bestehenden Signalerzeugers des Präsenzerfassungssensors verwirklicht. Die Nutzung des vorhandenen Präsenzerfassungssensors sichert einen besonders platzsparenden und kosteneffizienten Aufbau unter Verzicht auf zusätzliche Sender, Empfänger und Antenne(n) der Gebäudetechnikvorrichtung.

Die abhängigen Ansprüche definieren weitere Ausführungen der erfindungsgemäßen Gebäudetechnikvorrichtung, die die Erfindung weiterbilden.

Gemäß einer bevorzugten Ausführungsform umfasst die Vorrichtung der Gebäudetechnik den Empfänger dafür ausgelegt, an einer Ausgangsschnittstelle ein aus dem zweiten Funksignal erzeugtes informationstragendes Signal auszugeben. Das informationstragende Signal enthält dabei eine in dem empfangenen zweiten Funksignal enthaltene Information, insbesondere dem empfangenen zweiten Funksignal aufmodulierte Nutzdaten einer weiteren Vorrichtung. Die solcherart eingerichtete Vorrichtung der Gebäudetechnik verfügt damit über die Fähigkeit bidirektional mit entsprechend eingerichteten weiteren Vorrichtungen der Gebäudetechnik zu kommunizieren. Damit wird eine automatische Synchronisation bzw. ein Abstimmen des Betriebs präsenzgesteuerter Vorrichtungen der Gebäudetechnik in einem System ermöglicht. Beispielsweise wird es möglich, flexible Arbeitsplatzgestaltung in Großraumbüros mit nutzungsabhängiger Anpassung der Beleuchtung unter Vermeidung von Lichtinseln zu schaffen. Eine Vorrichtung der Gebäudetechnik gemäß einer Ausführungsform zeichnet sich dadurch aus, dass das Modulationssignal und/oder das demodulierte informationstragende Signal zumindest eine Vorrichtungs-Identifikationsinformation, eine Information über einen Ein-/Ausschaltvorgang eines Aktors der Vorrichtung der Gebäudetechnik, oder eine Information über einen Betriebszustand der Vorrichtung der Gebäudetechnik umfasst.

Mit den Funksignalen des Präsenzerfassungssensors können somit für die Verwirklichung einer Schwarmfunktion vernetzter Leuchten erforderliche Steuerinformationen zwischen den einzelnen Vorrichtungen der Gebäudetechnik und deren jeweiligen Steuereinheiten übertragen werden.

Gemäß einer Ausführungsform der Vorrichtung der Gebäudetechnik ist der Signalerzeuger dafür eingerichtet, das erste Funksignal als mit dem Modulationssignal frequenzmoduliertes Signal oder als amplitudenmoduliertes Signal zu erzeugen. Die Vorrichtungen der Gebäudetechnik können beispielsweise Leuchten mit Leuchtmitteln als Aktoren sein. Mit der mittels der Präsenz- Erfassungssensoren verwirklichten Funkverbindung zur Vernetzung der Steuereinheiten der Leuchten wird der Aufbau einer intelligenten Schwarmsteuerung mit dem Ziel der Vermeidung von Lichtinseln bei Betrieb der Leuchten ermöglicht. Eine automatische Anpassung der individuellen Beleuchtungsstärke einzelner Leuchten in einem Schwarm von Leuchten gewährleistet eine stets ergonomische und von Personen als angenehm wahrgenommene Lichtverteilung im Raum.

Die Vorrichtung der Gebäudetechnik einer weiteren Ausführungsform umfasst den Signalerzeuger derart ausgelegt, dass das erste Funksignal als mit dem Modulationssignal amplitudenmoduliertes Signal durch Tasten des ersten Funksignals erzeugt wird.

Durch Tasten, also gezieltes Ein-/Ausschalten des ersten Funksignals kann eine technisch einfach zu verwirklichende Modulation des Sensorsignals des Präsenzerfassungssensors im Takt eines Modulationssignals mit dem Ziel der Informationsübertragung (Nutzdatenübertragung) verwirklicht werden.

In einer Ausführungsform der Vorrichtung der Gebäudetechnik ist der Signalerzeuger dafür eingerichtet, in einem ersten Zeitabschnitt das erste Funksignal als mit dem Modulationssignal moduliertes Signal zu erzeugen, und in einem zweiten Zeitabschnitt das erste Funksignal als nichtmoduliertes Signal, insbesondere als ein nicht mit dem Modulationssignal moduliertes Signal zu erzeugen und auszugeben.

Diese technische Ausbildung ermöglicht es, im ersten Zeitabschnitt den Präsenzerfassungssensor für die Datenübertragung von Nutzdaten mittels des Modulationssignals zu nutzen, und im zweiten Zeitabschnitt den Präsenzerfassungssensor für seine originäre Funktion der Feststellung der Anwesenheit von Personen im Erfassungsbereich des Präsenzerfassungssensors einzusetzen ohne bei der Auswertung des reflektierten Signals als zweitem Funksignal die im Sendesignal enthaltene Modulation zu berücksichtigen.

Die Vorrichtung der Gebäudetechnik nach einer weiteren Ausführungsform weist den Signalerzeuger derart eingerichtet auf, dass das erste Funksignal als mit dem Modulationssignal moduliertes Signal kontinuierlich zu erzeugen, und den Auswerter dafür eingerichtet, das zweite Funksignal unter Berücksichtigung der reflektierten Komponente auszuwerten, insbesondere in dem zweiten Funksignal eine reflektierte Komponente des gesendeten ersten Funksignals zu filtern.

Bei kontinuierlicher Nutzung des ersten Funksignals für die Übertragung von Nutzinformation kann eine funktionale Trennung der Hauptfunktion Präsenzerfassung und der Zusatzfunktion Nutzdatenübertragung im Empfangszug des Präsenzerfassungssensors mittels einfacher Frequenzfilterung erfolgen.

In der Beleuchtungstechnik ist die Steuerung der Lichtabgabe unter Nutzung der Signale von Präsenzerfassungssensoren verbreitet. Es werden insbesondere auch Präsenzerfassungssensoren auf Funkbasis nach dem Prinzip des Dauerstrichradars (englisch: Continuous Wave Radar, abgekürzt: CW-Radar) zur Erkennung von Bewegungen in einem Erfassungsbereich des Präsenzerfassungssensors genutzt.

Insbesondere Betriebsgeräte von Leuchten mit Leuchtdioden (LED) als Leuchtmittel weisen oft Steuereinrichtungen auf, die Steuerdaten für die Einstellung von Betriebsparametern, wie zum Beispiel einen Wert des Laststroms des Betriebsgeräts für den Betrieb der LED, oder eine Farbtemperatur des abgegebenen Lichts, von außen empfangen können. In Beleuchtungssystemen, in denen die Komponenten zum Datenaustausch vernetzt sind, sind die Komponenten mit jeweils einer Steuereinrichtung verbunden, die unter anderem den Datenaustausch während des Netzwerkbetriebs steuert und durch ihre eindeutige Zuordnung die Komponente im Netzwerk identifiziert. Mittels der erfindungsgemäß ausgelegten Leuchte, des Betriebsgeräts oder des Leuchtmittels können solche Betriebsparameter und/oder Adressen für die Identifizierung in einem Beleuchtungsnetzwerk in einfacher Weise übertragen werden.

In der Vorrichtung der Gebäudetechnik ist der Signalerzeuger dafür eingerichtet, das erste Funksignal mit einem aus dem zweiten Funksignal demodulierten informationstragenden Signal zu modulieren.

Diese technische Auslegung ermöglicht den zusätzlichen Vorteil, den oder die Präsenzerfassungssensoren mehrere Vorrichtung der Gebäudetechnik als Relaisstationen zu verwenden, und somit Nutzdaten über die jeweils überlappenden Erfassungsbereiche der Präsenzerfassungssensoren mehrerer Vorrichtungen hinweg zu übertragen. Die Reichweite der so verwirklichten Kommunikationsverbindung wird damit in einfacher Weise vergrößert. Eine Nutzdatenübertragung zwischen den Präsenzerfassungssensoren ohne direkt überlappende Erfassungsbereiche wird möglich.

In einem zweiten Aspekt der Erfindung löst eine Anordnung (System) mit Vorrichtungen der Gebäudetechnik die technische Aufgabenstellung. Die Anordnung umfasst zumindest eine erste Vorrichtung der Gebäudetechnik nach dem ersten Aspekt und zumindest eine zweite Vorrichtung der Gebäudetechnik nach dem ersten Aspekt, wobei die zumindest eine zweite Vorrichtung der Gebäudetechnik gemäß der bevorzugten Ausführungsform den Empfänger entsprechend ausgelegt zeigt, an einer Ausgangsschnittstelle das aus dem zweiten Funksignal erzeugte informationstragende Signal auszugeben. Die Anordnung nach dem zweiten Aspekt ist eingerichtet von der zumindest einen ersten Vorrichtung mittels des ersten Funksignals und des zweiten Funksignals Information (Nutzdaten) zu der zumindest einen zweiten Vorrichtung übertragen.

Eine solche Anordnung von Vorrichtungen der Gebäudetechnik ermöglicht die besonders einfache Errichtung eines Systems vernetzter Vorrichtungen, die intelligente Lösungen in der Gebäudeautomation ermöglichen.

Gemäß einer Ausführungsform des Systems der Gebäudetechnik sind die erste Vorrichtung und die zweite Vorrichtung derart räumlich zueinander angeordnet, dass sich ein erster Erfassungsbereich des Präsenzerfassungssensors der ersten Vorrichtung und ein zweiter Erfassungsbereich des Präsenzerfassungssensors der zweiten Vorrichtung zumindest teilweise überlappen.

Eine solche teilweise Überlappung der Erfassungsbereich benachbarter Präsenzerfassungssensoren von Vorrichtung der Gebäudetechnik ist oftmals bereits vorhanden. Mit der erfindungsgemäßen Ausbildung der Vorrichtungen wird damit der einfache und kostengünstige Aufbau eines Systems vernetzter Vorrichtungen der Gebäudetechnik möglich. In einem dritten Aspekt der Erfindung löst ein Übertragungsverfahren für die Signalübertragung zwischen zumindest zwei Gebäudetechnikvorrichtungen nach dem ersten Aspekt die technische Aufgabe entsprechend.

Das Verfahren zur Übertragung von Daten zwischen einer ersten und zumindest einer zweiten Vorrichtung der Gebäudetechnik umfasst die Schritte:

Erzeugen, durch eine Kommunikationseinheit der ersten Vorrichtung, eines, Daten der ersten Vorrichtung übermittelnden Modulationssignals und Einlesen des erzeugten Modulationssignals an einem Modulationseingang eines ersten Präsenzerfassungssensors der ersten Vorrichtung; Erzeugen, durch einen Signalerzeuger des ersten Präsenzerfassungssensors, eines ersten Funksignals als ein mit dem Modulationssignal moduliertes Signal; Senden, mittels einer ersten Antenne des ersten Präsenzerfassungssensors, des ersten Funksignals; Empfangen, mittels einer zweiten Antenne und eines Empfängers eines zweiten Präsenzerfassungssensors der zweiten Vorrichtung, eines zweiten Funksignals, wobei zumindest eine Komponente des zweiten Funksignals das gesendete erste Funksignal umfasst; Auswerten, in einem Auswerter des zweiten Präsenzerfassungssensors, des empfangenen zweiten Funksignals, um die in dem Modulationssignal enthaltenen Daten der ersten Vorrichtung zu erhalten; Ausgeben der durch die Auswertung erhaltenen Daten der ersten Vorrichtung an einer Ausgangsschnittstelle des Präsenzerfassungssensors der zweiten Vorrichtung; Erzeugen, durch einen Signalerzeuger des zweiten Präsenzerfassungssensors, eines weiteren zweiten Funksignals als ein mit den erhaltenen Daten der ersten Vorrichtung moduliertes Signal, und Senden, mittels einer ersten Antenne des zweiten Präsenzerfassungssensors, des weiteren zweiten Funksignals, und wobei die erste und zweite Vorrichtung Leuchten sind.

Ausführungsformen der Erfindung werden nachstehend mit Bezug zu den Figuren vorgestellt. Es zeigen:
- Fig. 1: ein vereinfachtes Blockschaltbild einer Gebäudetechnikvorrichtung mit Präsenzerfassungssensor gemäß einer Ausführung der Erfindung,
- Fig. 2: eine Ansicht einer Anordnung zweier Leuchten gemäß einer Ausführung der Erfindung,
- Fig. 3: eine Übersicht über einer Anordnung von Leuchten in einem Raum gemäß einer Ausführung der Erfindung, und
- Fig. 4: ein einfaches Ablaufdiagramm der Signalübertragung zwischen zwei Leuchten gemäß einer Ausführung der Erfindung.

In den Figuren bezeichnen gleiche Referenzzeichen Elemente mit gleicher oder entsprechender Funktion. Auf die Diskussion gleicher Referenzzeichen in unterschiedlichen Figuren wird, soweit dies ohne Beeinträchtigung der Verständlichkeit möglich erscheint, zugunsten einer knappen Darstellung verzichtet.

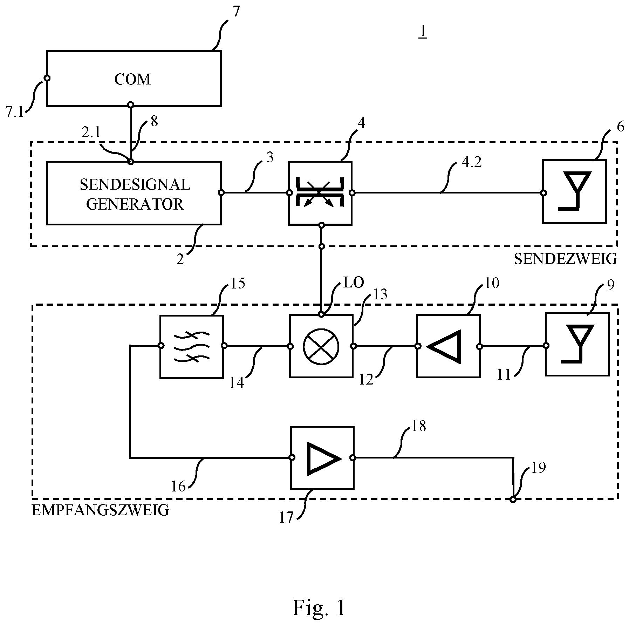

Fig. 1 zeigt ein vereinfachtes Blockschaltbild eines Präsenzerfassungssensors 1 einer Gebäudetechnikvorrichtung gemäß einer Ausführung der Erfindung. Der gezeigte Präsenzerfassungssensor 1 ist insbesondere für die Steuerung von Leuchten als bevorzugtem Beispiel für eine Vorrichtung der Gebäudetechnik geeignet.

Alternativ oder zusätzlich kann der Präsenzerfassungssensor 1 Teil einer Raumklimatisierung, einer Beschattungseinrichtung, einer Raumüberwachung oder einem vergleichbaren System der Gebäudetechnik sein.

Der dargestellte Präsenzerfassungssensor 1 entspricht mit seinen wesentlichen Baugruppen einem HF- Präsenzerfassungssensor nach dem Prinzip eines Dauerstrichradars mit einer einfachen Dopplerauswertung eines reflektierten Empfangssignals zur Detektion von relativ zu dem Präsenzerfassungssensor 1 bewegten reflektierenden Objekten. Der HF-Präsenzerfassungssensor 1 ist somit in der Lage, die Bewegungen von Personen in seinem Erfassungsbereich zu erkennen (detektieren) und in einem Sensorsignal einer Steuereinheit des Gebäudetechniksystems die Detektion zu übermitteln. Die Steuereinheit kann auf Grundlage des oder der Sensorsignale Aktoren des Gebäudetechniksystems, zum Beispiel Leuchten und deren Leuchtmittel, geeignet ansteuern. Der Aufbau eines HF Präsenzerfassungssensors nach dem Dauerstrichradarprinzip und Dopplerfrequenzauswertung ist grundsätzlich bekannt.

Der Präsenzerfassungssensor 1 umfasst einen Sendezweig und einen Empfangszweig. Der Sendezweig erzeugt in einer Signalerzeugereinheit 2 (Signalerzeuger, Signalgenerator; englisch: Exciter) ein Sensorsignal 3. Dieses Sensorsignal 3 ist bei bekannten Signalerzeugern ein elektrisches Signal mit einer vorbestimmten Frequenz. Dieses erzeugte Sensorsignal 3 wird anschließend über einen Richtkoppler 4 einer Sendeantenne 6 des Präsenzerfassungssensors 1 als Sendesignal 4.2 zugeführt und als Funksignal (erstes Funksignal) in der Form von elektromagnetischen Wellen durch die Antenne 6 abgestrahlt.

Der Richtkoppler 4 koppelt einen Teil des Sensorsignals 3 mit einer bestimmten Koppeldämpfung aus und führt diesen ausgekoppelten Anteil 4.1 des Sendesignals 3 dem Empfangszweig, und zwar einem Lokaloszillatoreingang LO eines Mischers 13 des Präsenzerfassungssensors 1 zu.

Die erfindungsgemäße Signalerzeugereinheit 2 verfügt über einen Modulationseingang 2.1, über die der Signalerzeugereinheit 2 ein Modulationssignal 8 zugeführt wird. Die Signalerzeugereinheit 2 erzeugt das Sensorsignal 3 als ein mit dem zugeführten Modulationssignal 8 moduliertes Signal.

Eine Kommunikationseinheit 7 des Präsenzerfassungssensors 1 liest Nutzdaten über eine Datenschnittstelle 7.1 ein und erzeugt das Modulationssignal 8 derart, dass es die codierten eingelesenen Nutzdaten umfasst.

Als Modulationsverfahren sind bekannte Verfahren, zum Beispiel Amplitudenmodulation oder Frequenzmodulation möglich.

Der Sendesignalgenerator 2 kann das Sendesignal 3 in einem ersten Zeitabschnitt als mit dem Modulationssignal 8 moduliertes Signal erzeugen, und in ein einem zweiten Zeitabschnitt das Sendesignal 3 als nichtmoduliertes Signal zu erzeugen.

Damit sind in dem mit der Sendeantenne 6 abgestrahlten ersten Funksignal die eingelesenen Nutzdaten codiert und moduliert enthalten.

Der Empfangszweig der dargestellten Präsenzerfassungseinheit 1 umfasst eine Empfangsantenne 9. Die Empfangsantenne 9 empfängt ein zweites Funksignal. Das empfangene zweite Funksignal wird als Empfangssignal 11 von einem Empfangssignalausgang der Empfangsantenne 9 über einen rauscharmen Vorverstärker 10 verstärkt und als verstärktes Empfangssignal dem Mischer 13 zugeführt.

Der Mischer 13 mischt das vorverstärkte Empfangssignal 12 mit dem ausgekoppelten Anteil 4.1 des Sendsignals in das Basisband.

Der rauschare Vorverstärker 10 und der Mischer sind Baugruppen des Empfängers des Präsenzerfassungssensors 1. Diese Baugruppen sind Teil des Präsenzerfassungssensors 1 für die Detektion der Anwesenheit von Personen im Erfassungsbereich.

Der Mischer erzeugt Mischprodukte des vorverstärkten Empfangssignals 12 und des ausgekoppelten Anteils 4.1 des Sendsignals als Lokaloszillatorsignal. Mittels Filterung des Mischerausgangssignals 14 in einem Filter 15 kann eine Basisbandkomponente des Mischerausgangssignals 14 herausgefiltert werden, die ein Modulationssignal mit Nutzdaten einer weiteren Präsenzerfassungseinheit 1 einer weiteren Gebäudetechnikvorrichtung als Basisbandempfangssignal 16 umfasst. Das so erhaltene Basisbandempfangssignal 16 mit empfangenen Nutzdaten der weiteren Gebäudetechnikvorrichtung kann anschließend über einen Verstärker 17 als verstärktes Basisbandempfangssignal 18 über eine Ausgangsschnittstelle 19 einer zeichnerisch nicht dargestellten weiteren Kommunikationseinheit des Präsenzerfassungssensors 1 und/oder der Gebäudetechnikvorrichtung zugeführt werden.

Die weitere Kommunikationseinheit kann Teil der Kommunikationseinheit 7 oder Teil einer Steuereinheit der Gebäudetechnikvorrichtung sein. Die weitere Kommunikationseinheit demoduliert und dekodiert das verstärkte Basisbandsignal 18, um die von der weiteren Gebäudetechnikvorrichtung übermittelten Nutzdaten zu erhalten.

Filter 15 und Verstärker 17, sowie die Ausgangsschnittstelle 19 sind Teil des Auswerters des Präsenzerfassungssensors 1. In Fig. 1 nicht dargestellt ist die vergleichbar aufgebaute Dopplerfrequenzauswertung des Auswerters des Präsenzerfassungssensors 1. Die Dopplerfrequenzauswertung kann eine Detektionsinformation erzeugen, wenn eine Frequenzverschiebung des zweiten Funksignals gegenüber dem ersten Funksignal erkannt wird, die eine vorbestimmte Schwelle überschreitet, und gibt dieses Detektionsinformation in einem Detektionssignal aus.

Der Aufbau des Präsenzerfassungssensors 1 nach Fig. 1 ist eine von mehreren Möglichkeiten. Alternativ ist ein Aufbau mit einer Antenne für Senden des ersten Funksignals und Empfangen des zweiten Funksignals und Trennung von Sende- und Empfangszweig mittels eines Zirkulators ebenso möglich.

Ein Antennendiagramm der zweiten Antenne 9 bestimmt im Wesentlichen den Erfassungsbereich des Präsenzerfassungssensors 1, in dem die Präsenz eine Person erkannt werden kann.

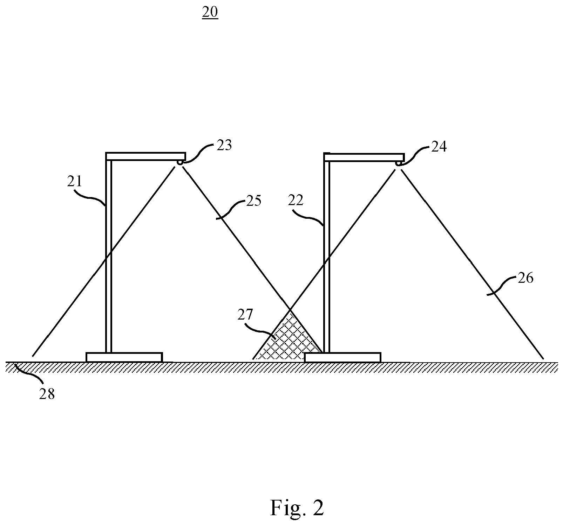

Fig. 2 stellt eine Ansicht einer Anordnung von Leuchten 21, 22 gemäß einer Ausführung der Erfindung dar. Die Leuchten 21, 22 stellen eine einfache Ausführung eines Beleuchtungssystems 20 als bevorzugte Ausführungsform eines erfindungsgemäßen Systems der Gebäudetechnik dar. Die erste Leuchte 21 und die zweite Leuchte 22 sind jeweils als Stehlampen ausgebildet. Die erste Leuchte 21 weist einen ersten Präsenzerfassungssensor 23 auf, dessen erster Erfassungsbereich 25 im Wesentlichen den von der ersten Leuchte 21 ausgeleuchteten Bereich abdeckt. Die zweite Leuchte 23 umfasst einen zweiten Präsenzerfassungssensor 24, dessen zweiter Erfassungsbereich 26 im Wesentlichen den von der zweiten. Leuchte 23 ausgeleuchteten Bereich umfasst.

Der erste Erfassungsbereich 25 und der zweite Erfassungsbereich 26 werden jeweils durch die Strahlungscharakteristik (Antennendiagramm) einer Antenne des ersten Präsenzerfassungssensors 23 und des zweiten Präsenzerfassungssensors 24 bestimmt. Die erste Leuchte 21 und die zweite Leuchte 22 sind derart zueinander im Raum angeordnet, dass der erste Erfassungsbereich 25 und der zweite Erfassungsbereich 26 zumindest teilweise überlappen. Die zumindest teilweise Überlappung des ersten Erfassungsbereichs 25 und des zweiten Erfassungsbereichs 26 ist in Fig. 2 durch einen zeichnerisch gekennzeichneten Bereich 27 dargestellt.

Die zumindest teilweise Überlappung des ersten Erfassungsbereichs 25 und des zweiten Erfassungsbereichs 26 ermöglichen eine Signalübertragung eines elektromagnetischen Signals von dem ersten Präsenzerfassungssensor 23 der ersten Leuchte 21 zum Präsenzerfassungssensor 24 der zweiten Leuchte 22 und von dem zweiten Präsenzerfassungssensor 24 der zweiten Leuchte 22 zu dem Präsenzerfassungssensor 23 der ersten Leuchte 21. Diese Signalübertragung kann über Reflexion an Flächen im Raum ermöglicht werden. Insbesondere kann dies über Reflexion an einer Bodenfläche 28 und/oder weiteren, in den Erfassungsbereichen 25, 26 angeordneten, elektromagnetische Wellen reflektierende Flächen erfolgen.

Die in Fig. 2 gezeigte Ausführungsform eines Beleuchtungssystems 20 gemäß der vorliegenden Erfindung ermöglicht eine Übertragung von Nutzdaten zwischen den dargestellten zwei Stehleuchten 21, 22, die jeweils einen Präsenzerfassungssensor 23, 24 zum Ein- und Ausschalten des eigenen Leuchtmittels der jeweiligen Stehleuchte 21, 22 aufweisen. Das Ein- und Ausschalten der Stehleuchte 21, 22 erfolgt auf Basis des Erfassens oder Nichterfassens der Anwesenheit einer Person im jeweiligen Erfassungsbereich des Präsenzerfassungssensor 23, 24. Die Erfassung einer Person durch den ersten Präsenzerfassungssensor 23 der Stehleuchte 21 löst ein Einschalten der Stehleuchte 21 aus. Die Stehleuchte 21 umfasst zumindest ein Leuchtmittel als Aktor und leuchtet mit einer ersten Beleuchtungsstärke. Die erste Beleuchtungsstärke kann beispielsweise ein Arbeiten in dem von der Stehleuchte 21 ausgeleuchteten Bereich ermöglichen. Zugleich erzeugt die Steuereinheit der Stehleuchte 21 ein Modulationssignal, mit dem das erste Funksignal der Stehleuchte 21 moduliert wird. Das Modulationssignal kann Information als Nutzdaten enthalten, die einerseits das Einschalten der Stehleuchte 21 anzeigt, und andererseits einen Helligkeitswert und/oder eine Lichtfarbe des von der Stehleuchte 21 abgestrahlten Lichts signalisiert. Die in dem Modulationssignal enthaltene Information wird in dem ersten Funksignal in den Erfassungsbereich 25 des ersten Präsenzsensors 23 abgestrahlt. Der zweite Präsenzsensor 24 empfängt das reflektierte Funksignal als ein zweites Funksignal in seinem zweiten Erfassungsbereich 26. Das empfangene zweite Funksignal umfasst zum einen eine erste Signalkomponente, die das reflektierte, von dem zweiten Präsenzerfassungssensor 24 gesendete Sensorsignal umfasst. Weiter umfasst das empfangene zweite Funksignal eine weitere, zweite Signalkomponente, die das reflektierte erste Funksignal des ersten Präsenzerfassungssensors 23 der ersten Stehleuchte 21 umfasst. Der erfindungsgemäß ausgebildete zweite Präsenzerfassungssensor 24 wertet die zweite Signalkomponente des zweiten Funksignals mit dem empfangenen ersten Funksignal aus, insbesondere demoduliert der zweite Präsenzerfassungssensor 24 das empfangene zweite Funksignal und gibt die Information, die in ursprünglichen Modulationssignal enthalten war, über die Ausgangsschnittstelle als ein informationstragendes Signal an eine Steuereinheit der zweiten Stehleuchte 22 aus. Die Steuereinheit der zweiten Stehleuchte 22 entscheidet auf der Grundlage der über die Datenausgangsschnittstelle erhaltenen Information, dass die unmittelbar benachbarte erste Stehleuchte 21 mit der ersten Helligkeit leuchtet, und, wenn zugleich in dem zweiten Erfassungsbereich 26 der Stehleuchte 22 keine Bewegung erfasst wird, mit einer zweiten Beleuchtungsstärke Licht abzugeben. Die zweite Beleuchtungsstärke ist dabei insbesondere eine von der ersten Beleuchtungsstärke verschiedene, bevorzugt eine geringere Beleuchtungsstärke.

Der zweite Präsenzerfassungssensor 24 wertet das empfangene zweite Funksignal, insbesondere dessen erste Komponente, die das von dem zweiten Präsenzerfassungssensor 24 selbst gesendete Sensorsignal umfasst, in der bekannten Weise aus. Insbesondere kann der zweite Präsenzerfassungssensor 24 die erste Komponente des empfangenen zweiten Funksignals, die das von dem zweiten Präsenzerfassungssensor 24 gesendete Sensorsignal umfasst, auf eine Frequenzverschiebung (Dopplerfrequenz) des empfangenen reflektierten Sensorsignals hin auswerten. Wird eine Frequenzverschiebung mittels der Auswertung erkannt, so gibt der zweiten Präsenzerfassungssensor 24 eine entsprechende Präsenzinformation an die Steuereinheit der zweiten Leuchte 22. In diesem Fall wird die zweite Leuchte 22 unbeachtlich der aus dem zweiten Sensorsignal, bzw. dessen zweiter Komponente extrahierten Information von der ersten Stehleuchte 21 mit der ersten Beleuchtungsstärke Licht in ihren Beleuchtungsbereich abgeben.

Eine entsprechende Signalübertragung von der ersten Stehleuchte 21 zu der zweiten Stehleuchte 22 kann für einen Ausschaltvorgang der ersten Stehlleuchte 21 erfolgen, wenn der erste Präsenzerfassungssensor 23 erkennt, dass sich im ersten Erfassungsbereich 25 keine Person aufhält, bzw. keine Bewegung einer Person erkennbar ist. Diese Signalübertragung kann in entsprechender Weise zu dem dargestellten Beispiel für den Einschaltvorgang erfolgen.

In dem beschriebenen Ausführungsbeispiel eines Beleuchtungssystems 20 mit zwei Stehleuchten 21, 22 werden als Nutzdaten zwischen den Präsenzerfassungssensoren 23, 24 Nutzdaten betreffend eine Beleuchtungsstärke übertragen.

Alternativ oder zusätzlich können die Nutzdaten Identifikationsdaten zur Identifizierung einzelner Gebäudetechnikvorrichtungen (Stehleuchten 21, 22), Identifikationsdaten zur Identifizierung für Gruppen von Gebäudetechnikvorrichtungen, Adressdaten für einzelne oder mehrere Gebäudetechnikvorrichtungen, Statusdaten zu Betriebszuständen einzelner oder mehrerer Gebäudetechnikvorrichtungen, insbesondere auch Statusdaten zu Betriebszuständen der Aktoren einzelner oder mehrerer Gebäudetechnikvorrichtungen umfassen.

Alternativ oder zusätzlich können die Nutzdaten Steuerdaten zur Übermittlung zwischen Steuereinheiten der Gebäudetechnikvorrichtungen (Stehleuchte 21, 22) umfassen.

Alternativ oder zusätzlich können die Nutzdaten Kalibrierungs- oder Kommissionierungsdaten für die Gebäudetechnikvorrichtung (Stehleuchte 21, 22) umfassen.

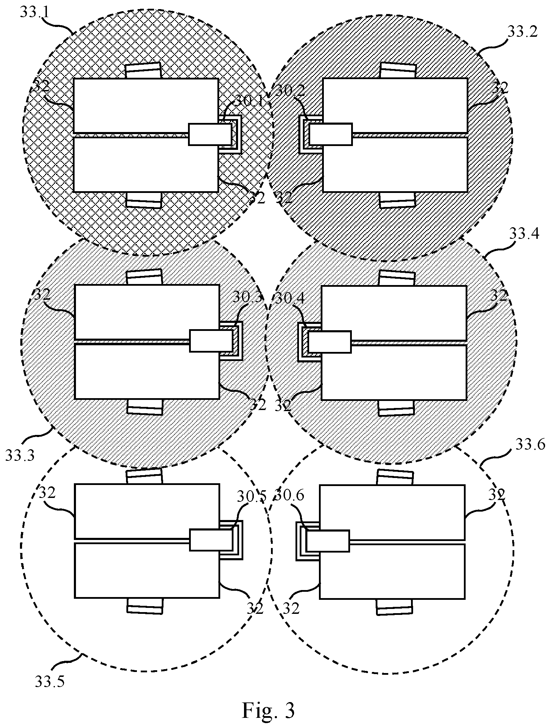

Fig. 3 zeigt eine Übersicht über eine Anordnung 20 von Leuchten 30.x, x = 1, .., 6, in einem Raum gemäß einer Ausführung der Erfindung.

Die Erfindung ist nicht auf eine Anordnung von Leuchten beschränkt. Es können beispielsweise auch Leuchten 30.x an einem Gebäude oder im öffentlichen Raum, beispielsweise einer Straße, einem Weg oder Platz erfindungsgemäß mittels Präsenzerfassungssensoren 1 vernetzt werden.

Die wechselnden Anwesenheitssituationen von Mitarbeitern in Büros mit präsenz- und tageslichtabhängig geregelten Leuchten 30.x führt zur Entstehung sogenannter Lichtinseln. Der Schreibtisch eines anwesenden Mitarbeiters ist durch dessen Leuchte 30.1 beleuchtet und bildet eine Lichtinsel in einem sonst unbeleuchteten Raum, während der Rest des Raumes aufgrund fehlender Präsenz von Personen vollständig unbeleuchtet ist. Die Verwendung von Leuchten 30.x als Beispiele der erfindungsgemäßen Vorrichtungen der Gebäudetechnik ermöglicht es nun, dass Leuchten 30.x miteinander kommunizieren. Damit wird eine geeignete Steuerung der Leuchten 30.x ermöglicht, um die Bildung isolierter Lichtinseln in dem Raum zu vermeiden. Jede dargestellte Leuchte 30.x ist zwei Arbeitsplätzen 32 zugeordnet und leuchtet diese zwei Arbeitsplätze 32 mit einer einstellbaren oder vorgegebenen Beleuchtungsstärke aus. Jede Leuchte 30.x verfügt über einen Präsenzerfassungssensor, dessen Erfassungsbereich 33.x, x = 1, .., 6, den Bereich, in dem die beiden durch die jeweilige Leuchte 30.x, x = 1, .., 6, ausgeleuchteten Arbeitsplätze 32 angeordnet sind, umfasst.

Die Leuchten 30.x, x = 1, .., 6, sind im Raum derart angeordnet, dass sich die Erfassungsbereiche 33.x benachbarter Leuchten 30.x zumindest teilweise überlappen. In Fig. 3 überlappen sich beispielsweise der Erfassungsbereich 33.1 der ersten Leuchte 30.1 und der Erfassungsbereich 33.2 der zweiten Leuchte 30.2. Weiter überlappen sich der Erfassungsbereich 33.1 der ersten Leuchte 30.1 und der Erfassungsbereich 33.3 der dritten Leuchte 30.3. Ebenso überlappen sich der Erfassungsbereich 33.2 der zweiten Leuchte 30.2 und der Erfassungsbereich 33.4 der vierten Leuchte 30.4, und der Erfassungsbereich 33.3 der dritten Leuchte 30.3 und der Erfassungsbereich 33.4 der vierten Leuchte 30.4.

Damit ist eine direkte Übertragung von Nutzdaten über den Präsenzerfassungssensor der ersten Leuchte 30.1 jeweils zu dem Präsenzerfassungssensor der zweiten Leuchte 30.2 und zu dem Präsenzerfassungssensor der dritten Leuchte 30.3 möglich.

Sind die zweiten Leuchte 30.2 die dritte Leuchte 30.3, insbesondere deren Präsenzerfassungssensoren, für einen Betrieb als Relais eingerichtet, so kann eine (indirekte) Übertragung von Nutzdaten über den Präsenzerfassungssensor der ersten Leuchte 30.1 über zu den Präsenzerfassungssensor der zweiten Leuchte 30.2 und/oder der dritten Leuchte 30.3 zu dem Präsenzerfassungssensor der vierten Leuchte 30.4 verwirklicht werden.

Damit werden erweiterte Beleuchtungsfunktionen mittels Ausbilden einer Schwarmfunktion möglich.

Beispielsweise können die Leuchten 30.x unter Ausnutzung der Vernetzungsfähigkeit nun verschiedenen Bereichen und Gruppen zugeteilt werden. Alternativ oder zusätzlich kann eine automatische Adressierung einzelner Leuchten 30.x über eine entsprechend ausgelegte Steuereinheit erfolgen. Registriert der Präsenzerfassungssensor 31.x einer Leuchte einer definierten Gruppe von Leuchten 30.x die Präsenz eines Mitarbeiters, so leuchtet diese Leuchte 30.x mit der vordefinierten oder einstellbaren ersten Beleuchtungsstärke (Arbeitsbeleuchtung). Weiter meldet diese Leuchte 30.x über den durch ihren Präsenzerfassungssensor 31.x bereitgestellten Nutzdatenkanal an die weiteren Mitglieder der definierten Gruppe von Leuchten 30.x die Präsenz einer Person. Die weiteren Leuchten 30.x der Gruppe werden so in die Lage versetzt, die unmittelbare Umgebung der Leuchte 30.x, die dem präsenten Mitarbeiter zugeordnet ist, auf einem mittels der weiteren Leuchten 30.x der Gruppe mit der zweiten Beleuchtungsstärke auf einem Grundniveau (Basisbeleuchtung, Hintergrundbeleuchtung) zu beleuchten.

In Fig. 3 ist angedeutet, dass in einem Erfassungsbereich 33.1 der ersten Leuchte 30.1 die Anwesenheit einer Person erkannt wird. Weiter ist durch schraffierte Darstellung der Erfassungsbereiche 33.2 und 33.3 der zweiten Leuchte 30.2 bzw. der dritten Leuchte 30.3 dargestellt, dass die Erfassung einer Person in einem unmittelbar benachbarten und teilweise überlappenden Erfassungsbereich 33.1 mittels der erfindungsgemäßen direkten Übertragung von Nutzdaten übermittelt wurde. Zusätzlich ist durch schraffierte Darstellung des Erfassungsbereichs 33.4 der vierten Leuchte 30.4 gezeigt, dass die Erfassung einer Person in einem unmittelbar benachbarten allerdings nicht überlappenden Erfassungsbereich 33.1 mittels der erfindungsgemäßen indirekten Übertragung von Nutzdaten übermittelt wurde. Die Übermittlung der entsprechenden Nutzdaten erfolgte erfindungsgemäß von der ersten Leuchte 30.1 zu der vierten Leuchte 30.4 mittels der Leuchte 30.2 und/oder de Leuchte 30.3 als Funkrelais.

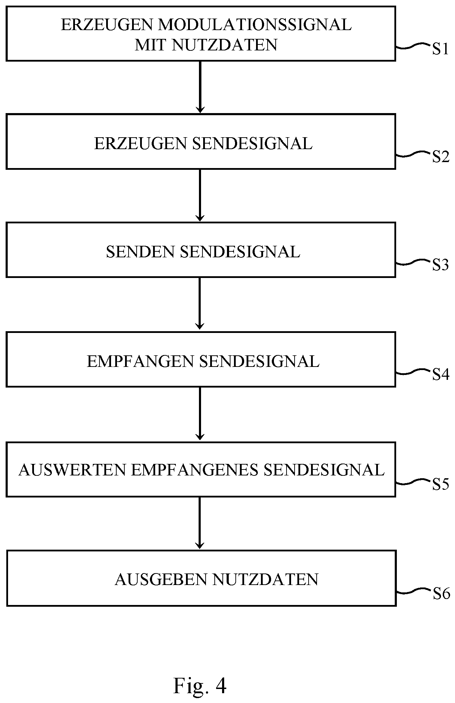

Fig. 4 ein einfaches Ablaufdiagramm eines Verfahrens der Signalübertragung zwischen Vorrichtungen der Gebäudetechnik gemäß einer Ausführung der Erfindung.

Das Verfahren zur Übertragung von Nutzdaten von der ersten Vorrichtung der Gebäudetechnik zu der zweiten Vorrichtung der Gebäudetechnik beginnt mit einem Schritt S1, in dem zunächst eine Kommunikationseinheit 8 der ersten Vorrichtung ein Modulationssignal 8 mit den zu übermittelnden Nutzdaten erzeugt. Das Modulationssignal 8 mit den Nutzdaten wird anschließend über einen Modulationseingang 2.1 einem ersten Präsenzerfassungssensor 1 der ersten Vorrichtung zugeführt.

Anschließend erzeugt in Schritt S2 eine Signalerzeugungseinheit 2 des ersten Präsenzerfassungssensors 1 ein Sendesignal 3, das ein mit dem Modulationssignal 8 moduliertes Signal ist, Dieses erzeugte Sendesignal wird dann in Schritt S3 mittels einer ersten Antenne 6 des ersten Präsenzerfassungssensors 1 abgestrahlt.

In Schritt S4 empfängt der zweite Präsenzerfassungssensor mittels seiner zweiten Antenne 9 und seinem zweiten Empfänger ein zweites Funksignal. Das zweite Funksignal umfasst zumindest eine Signalkomponente mit einem reflektierten Sensorsignal (erstes Funksignal des zweiten Präsenzerfassungssensors 1) des zweiten Präsenzerfassungssensors 1, sowie als eine (weitere) Signalkomponente des zweiten Funksignals das gesendete erste Funksignal desersten Präsenzerfassungssensors 1.

Das empfangene zweite Funksignal wird anschließend einem Auswerter des zweiten Präsenzerfassungssensors 1 zugeführt, und in dem Auswerter in Schritt S5 ausgewertet, um die in dem ursprünglichen Modulationssignal 8 enthaltenen Nutzdaten, also die von der ersten Vorrichtung übermittelten Daten, zu erhalten.

Nach dem Auswerten, insbesondere Demodulieren, werden die erhaltenen Nutzdaten der ersten Vorrichtung an eine Ausgangsschnittstelle 19 des zweiten Präsenzerfassungssensors 1 der zweiten Vorrichtung in Schritt S6 ausgegeben. Die ausgegebenen Nutzdaten können in einer Steuereinheit der zweiten Vorrichtung für die Erzeugung von Steuersignalen für die Ansteuerung eines Aktors der zweiten Vorrichtung auf Basis der von der ersten Vorrichtung übermittelten Nutzdaten genutzt werden.

## Patentansprüche

1. Vorrichtung der Gebäudetechnik, umfassend einen Präsenzerfassungssensor (1), wobei der Präsenzerfassungssensor (1) aufweist:
einen Signalerzeuger (2) zur Erzeugung eines ersten Funksignals und mit einem Modulationseingang für die Zuführung eines Modulationssignals (8), wobei der Signalerzeuger (2) eingerichtet ist, das erste Funksignal als ein mit dem Modulationssignal (8) moduliertes Signal auszugeben,
zumindest eine Antenne (6),
einen Empfänger für den Empfang eines zweiten Funksignals,
eine Ausgangsschnittstelle (19), welche dazu ausgelegt ist, ein aus dem zweiten Funksignal erzeugtes informationstragendes Signal (18) auszugeben, und
einen Auswerter zur Erzeugung einer Präsenzinformation mittels einer Auswertung des zweiten Funksignals,
**dadurch gekennzeichnet, dass**
der Signalerzeuger (2) dafür eingerichtet ist, das erste Funksignal mit einem aus dem zweiten Funksignal demodulierten informationstragenden Signal (18) zu modulieren, und
die Vorrichtung eine Leuchte ist.

2. Vorrichtung der Gebäudetechnik nach Anspruch 1, wobei
das Modulationssignal (8) und/oder das demodulierte informationstragende Signal zumindest
eine Vorrichtungs-Identifikationsinformation,
eine Information über einen Ein-/Ausschaltvorgang eines Aktors der Gebäudetechnikvorrichtung, oder
eine Information über einen Betriebszustand der Gebäudetechnikvorrichtung umfasst.

3. Vorrichtung der Gebäudetechnik nach einem der vorhergehenden Ansprüche, wobei
der Signalerzeuger (2) eingerichtet ist, das erste Funksignal als mit dem Modulationssignal (8) frequenzmoduliertes Signal oder als amplitudenmoduliertes Signal zu erzeugen.

4. Vorrichtung der Gebäudetechnik nach Anspruch 2, wobei
der Signalerzeuger (2) eingerichtet ist, das erste Funksignal als mit dem Modulationssignal (8) amplitudenmoduliertes Signal durch Tasten des ersten Funksignals zu erzeugen.

5. Vorrichtung der Gebäudetechnik nach einem der vorhergehenden Ansprüche, wobei
der Signalerzeuger (2) eingerichtet ist, in einem ersten Zeitabschnitt das erste Funksignal als mit dem Modulationssignal (8) moduliertes Signal zu erzeugen, und in einem zweiten Zeitabschnitt das erste Funksignal als nichtmoduliertes Signal zu erzeugen.

6. Vorrichtung der Gebäudetechnik nach einem der vorhergehenden Ansprüche, wobei
der Signalerzeuger (2) eingerichtet ist, das erste Funksignal als mit dem Modulationssignal (8) moduliertes Signal kontinuierlich zu erzeugen, und
der Auswerter eingerichtet ist, das zweite Funksignal unter Berücksichtigung der reflektierten Komponente auszuwerten, insbesondere in dem zweiten Funksignal eine reflektierte Komponente des gesendeten ersten Funksignals zu filtern.

7. System der Gebäudetechnik, umfassend zumindest eine erste Vorrichtung (21) der Gebäudetechnik und zumindest eine zweite Vorrichtung (22) der Gebäudetechnik nach einem der Ansprüche1 bis 6, wobei
die zumindest eine erste Vorrichtung (21) mittels Senden des ersten Funksignals Information zu der zumindest einen zweiten Vorrichtung (22) überträgt.

8. System der Gebäudetechnik nach Anspruch 7, wobei
die erste Vorrichtung (21) und die zweite Vorrichtung (22) derart räumlich zueinander angeordnet sind, dass sich ein erster Erfassungsbereich (25) des Präsenzerfassungssensors (23) der ersten Vorrichtung (21) und ein zweiter Erfassungsbereich (26) des Präsenzerfassungssensors (24) der zweiten Vorrichtung (22) zumindest teilweise überlappen.

9. Verfahren zur Übertragung von Daten zwischen einer ersten und zumindest einer zweiten Vorrichtung (21, 22) der Gebäudetechnik mit den Schritten:
Erzeugen, durch eine Kommunikationseinheit (7) der ersten Vorrichtung (21), eines, Daten der ersten Vorrichtung (21) übermittelnden Modulationssignals (8) und Einlesen des erzeugten Modulationssignals (8) an einem Modulationseingang (2.1) eines ersten Präsenzerfassungssensors (23) der ersten Vorrichtung (21),
Erzeugen, durch einen Signalerzeuger (2) des ersten Präsenzerfassungssensors (21), eines ersten Funksignals als ein mit dem Modulationssignal (8) moduliertes Signal,
Senden, mittels einer ersten Antenne (6) des ersten Präsenzerfassungssensors (21), des ersten Funksignals,
Empfangen, mittels einer zweiten Antenne (9) und eines
Empfängers eines zweiten Präsenzerfassungssensors (24) der zweiten Vorrichtung, eines zweiten Funksignals, wobei zumindest eine Komponente des zweiten Funksignals das gesendete erste Funksignal umfasst,
Auswerten, in einem Auswerter des zweiten Präsenzerfassungssensors (24), des empfangenen zweiten Funksignals, um die in dem Modulationssignal (8) enthaltenen Daten der ersten Vorrichtung (21) zu erhalten,
Ausgeben der durch die Auswertung erhaltenen Daten der ersten Vorrichtung (21) an einer Ausgangsschnittstelle (19) des Präsenzerfassungssensors (24) der zweiten Vorrichtung (22),
Erzeugen, durch einen Signalerzeuger (2) des zweiten Präsenzerfassungssensors (24), eines weiteren zweiten Funksignals als ein mit den erhaltenen Daten der ersten Vorrichtung (21) moduliertes Signal, und
Senden, mittels einer ersten Antenne (6) des zweiten Präsenzerfassungssensors (24), des weiteren zweiten Funksignals, und
wobei die erste und zweite Vorrichtung (21, 22) Leuchten sind.

## Claims

1. Building technology device comprising a presence detection sensor (1), the presence detection sensor (1) having:
a signal generator (2) for generating a first radio signal and which has a modulation input for supplying a modulation signal (8), the signal generator (2) being configured to output the first radio signal as a signal that is modulated with the modulation signal (8),
at least one antenna (6),
a receiver for receiving a second radio signal,
an output interface (19), which is designed to output an information-bearing signal (18) generated from the second radio signal, and
an evaluator for generating a piece of presence information by means of evaluating the second radio signal,
**characterized in that**
the signal generator (2) is configured to modulate the first radio signal with an information-carrying signal (18) that is demodulated from the second radio signal, and
the device is a lamp.

2. Building technology device according to claim 1, wherein
the modulation signal (8) and/or the demodulated information-bearing signal comprises at least
a piece of device identification information,
a piece of information about an on/off switching process of an actuator of the building technology device, or a piece of information about an operating state of the building technology device.

3. Building technology device according to either of the preceding claims, wherein
the signal generator (2) is configured to generate the first radio signal as a signal that is frequency-modulated with the modulation signal (8) or as an amplitude-modulated signal.

4. Building technology device according to claim 2, wherein
the signal generator (2) is configured to generate the first radio signal as a signal that is amplitude-modulated with the modulation signal (8) by keying the first radio signal.

5. Building technology device according to any of the preceding claims, wherein
the signal generator (2) is configured to generate the first radio signal as a signal that is modulated with the modulation signal (8) in a first time period and to generate the first radio signal as a non-modulated signal in a second time period.

6. Building technology device according to any of the preceding claims, wherein
the signal generator (2) is configured to continuously generate the first radio signal as a signal that is modulated with the modulation signal (8), and
the evaluator is configured to evaluate the second radio signal taking into account the reflected component, in particular to filter a reflected component of the transmitted first radio signal in the second radio signal.

7. Building technology system comprising at least one first building technology device (21) and at least one second building technology device (22) according to any of claims 1 to 6, wherein
the at least one first device (21) transmits information to the at least one second device (22) by means of sending the first radio signal.

8. Building technology system according to claim 7, wherein
the first device (21) and the second device (22) are spatially arranged relative to one another such that a first detection region (25) of the presence detection sensor (23) of the first device (21) and a second detection region (26) of the presence detection sensor (24) of the second device (22) overlap at least in part.

9. Method for transmitting data between a first and at least one second building technology device (21, 22), comprising the steps of:
generating, by a communication unit (7) of the first device (21), a modulation signal (8) transmitting data of the first device (21) and reading the generated modulation signal (8) at a modulation input (2.1) of a first presence detection sensor (23) of the first device (21),
generating, by a signal generator (2) of the first presence detection sensor (21), a first radio signal as a signal that is modulated with the modulation signal (8),
sending, by means of a first antenna (6) of the first presence detection sensor (21), the first radio signal,
receiving, by means of a second antenna (9) and a
receiver of a second presence detection sensor (24) of the second device, a second radio signal, wherein at least one component of the second radio signal comprises the transmitted first radio signal,
evaluating, in an evaluator of the second presence detection sensor (24), the received second radio signal in order to obtain the data of the first device (21) contained in the modulation signal (8),
outputting the data of the first device (21) obtained by the evaluation to an output interface (19) of the presence detection sensor (24) of the second device (22),
generating, by a signal generator (2) of the second presence detection sensor (24), a further second radio signal as a signal that is modulated with the data received from the first device (21), and
sending, by means of a first antenna (6) of the second presence detection sensor (24), the further second radio signal, and
wherein the first and the second device (21, 22) are lamps.

## Revendications

1. Dispositif de la technique des bâtiments, comprenant un capteur de détection de présence (1), dans lequel le capteur de détection de présence (1) présente :
un générateur de signaux (2) pour la génération d'un premier signal radio et comportant une entrée de modulation pour l'amenée d'un signal de modulation (8), dans lequel le générateur de signaux (2) est configuré pour délivrer en sortie le premier signal radio sous forme de signal modulé au moyen du signal de modulation (8),
au moins une antenne (6),
un élément de réception pour la réception d'un second signal radio,
une interface de sortie (19) qui est configurée pour délivrer en sortie un signal porteur d'informations (18) généré à partir du second signal radio, et
un élément d'évaluation pour la génération d'une information de présence au moyen d'une évaluation du second signal radio,
**caractérisé en ce que**
le générateur de signaux (2) est configuré pour moduler le premier signal radio au moyen d'un signal porteur d'informations (18) démodulé à partir du second signal radio, et
le dispositif est un luminaire.

2. Dispositif de la technique des bâtiments selon la revendication 1, dans lequel
le signal de modulation (8) et/ou le signal porteur d'informations démodulé comprend au moins
une information d'identification de dispositif,
une information concernant un processus de mise en marche/d'arrêt d'un actionneur du dispositif de technique des bâtiments, ou une information concernant un état de fonctionnement du dispositif de technique des bâtiments.

3. Dispositif de la technique des bâtiments selon l'une des revendications précédentes, dans lequel
le générateur de signaux (2) est configuré pour générer le premier signal radio en tant que signal modulé en fréquence au moyen du signal de modulation (8) ou en tant que signal modulé en amplitude.

4. Dispositif de la technique des bâtiments selon la revendication 2, dans lequel
le générateur de signaux (2) est configuré pour générer le premier signal radio en tant que signal modulé en amplitude au moyen du signal de modulation (8) en appuyant sur une touche du premier signal radio.

5. Dispositif de la technique des bâtiments selon l'une des revendications précédentes, dans lequel
le générateur de signaux (2) est configuré pour générer, dans un premier intervalle de temps, le premier signal radio en tant que signal modulé au moyen du signal de modulation (8) et pour générer, dans un second intervalle de temps, le premier signal radio en tant que signal non modulé.

6. Dispositif de la technique des bâtiments selon l'une des revendications précédentes, dans lequel
le générateur de signaux (2) est configuré pour générer en continu le premier signal radio en tant que signal modulé au moyen du signal de modulation (8), et
l'élément d'évaluation est configuré pour évaluer le second signal radio en tenant compte de la composante réfléchie, en particulier pour filtrer dans le second signal radio une composante réfléchie du premier signal radio émis.

7. Système de la technique des bâtiments, comprenant au moins un premier dispositif (21) de la technique des bâtiments et au moins un second dispositif (22) de la technique des bâtiments selon l'une des revendications 1 à 6, dans lequel
l'au moins un premier dispositif (21) transmet des informations à l'au moins un second dispositif (22) au moyen d'une émission du premier signal radio.

8. Système de la technique des bâtiments selon la revendication 7, dans lequel
le premier dispositif (21) et le second dispositif (22) sont disposés spatialement l'un par rapport à l'autre de telle sorte qu'une première zone de détection (25) du capteur de détection de présence (23) du premier dispositif (21) et qu'une seconde zone de détection (26) du capteur de détection de présence (24) du second dispositif (22) se chevauchent au moins partiellement.

9. Procédé permettant la transmission de données entre un premier et au moins un second dispositif (21, 22) de la technique des bâtiments, comportant les étapes consistant à :
générer, par une unité de communication (7) du premier dispositif (21), un signal de modulation (8) transmettant des données du premier dispositif (21) et lire le signal de modulation (8) généré au niveau d'une entrée de modulation (2.1) d'un premier capteur de détection de présence (23) du premier dispositif (21),
générer, par un générateur de signaux (2) du premier capteur de détection de présence (21), un premier signal radio en tant que signal modulé au moyen du signal de modulation (8),
émettre, au moyen d'une première antenne (6) du premier capteur de détection de présence (21), le premier signal radio,
recevoir, au moyen d'une seconde antenne (9) et d'un
élément de réception d'un second capteur de détection de présence (24) du second dispositif, un second signal radio, dans lequel au moins une composante du second signal radio comprend le premier signal radio émis,
évaluer, dans un élément d'évaluation du second capteur de détection de présence (24), le second signal radio reçu, afin d'obtenir les données du premier dispositif (21) contenues dans le signal de modulation (8),
délivrer en sortie les données du premier dispositif (21) obtenues par l'évaluation à une interface de sortie (19) du capteur de détection de présence (24) du second dispositif (22),
générer, par un générateur de signaux (2) du second capteur de détection de présence (24), un autre second signal radio en tant que signal modulé au moyen des données du premier dispositif (21) obtenues, et
émettre, au moyen d'une première antenne (6) du second capteur de détection de présence (24), l'autre second signal radio, et
dans lequel le premier et le second dispositif (21, 22) sont des luminaires.
